# EUROPÄISCHE PATENTSCHRIFT

(11) **EP 3 290 552 B1**
(45) Veröffentlichungstag und Bekanntmachung des Hinweises auf die Patenterteilung: **06.01.2021**
(21) Anmeldenummer: 16785887.7
(22) Anmeldetag: 21.04.2016
(51) Int. Cl.: D02J 1/22, F16C 19/00, D01H 13/02, B65H 57/14

(54) **GALETTENWALZE**
GODET ROLLER
ROULEAU À GODET

(30) Priorität: 29.04.2015 CN 201510212717
(43) Veröffentlichungstag der Anmeldung: 07.03.2018
(73) Patentinhaber: Schaeffler Technologies AG & Co. KG, 91074 Herzogenaurach (DE)
(72) Erfinder: DUAN, Yaokai, Taicang Jiangsu 250014 (CN)
(86) Internationale Anmeldenummer: PCT/CN2016/079942
(87) Internationale Veröffentlichungsnummer: WO 2016/173456

(56) Entgegenhaltungen:
- WO-A1-2014/166857
- CN-A- 1 800 458
- CN-A- 101 326 316
- CN-A- 102 126 641
- CN-U- 204 151 507
- DE-A1- 10 111 598
- DE-A1-102008 029 482
- DE-U- 1 690 405
- FR-A5- 2 122 889

## Beschreibung

### Gebiet der Erfindung

Die vorliegende Erfindung betrifft das technische Gebiet der Textilherstellungsmaschinen, und sie ist insbesondere vorteilhaft an einer Fadenführungsrolle realisierbar.

### Allgemeiner Stand der Technik

In für die Textilherstellung verwendeten Fadenführungsrollen des Stands der Technik: (CN204151507U) sind, wie in Figur 5 gezeigt, zwischen einer Welle 106 und einer Buchse 102 zwei Wälzlager 103 angeordnet, wobei das Wälzlager 103 beispielsweise ein Kugellager ist. Zwischen der Welle 106 und dem Innenring des Wälzlagers 103 besteht eine Presspassung, ebenso wie zwischen der Buchse 102 und dem Außenring des Wälzlagers 103. Ein Deckel 101 und ein Dichtungsring 104 sind jeweils in einer Nut der Buchse 102 montiert. Die Verbindungshülse 105 ist durch Presspassung auf der Welle 106 montiert. Der Deckel 101 kann aus Kunststoff gefertigt sein und der Dichtungsring 104 kann aus Stahl gefertigt sein.

Auf die Außenumfangsfläche der Buchse 102 ist ein Garn gewickelt. In der Anwendung rotiert die Buchse 102 unter der Mitnahme durch das Garn in Umfangsrichtung. Da zwischen der Buchse 102 und dem Außenring des Wälzlagers 103 eine Presspassung besteht, rotiert der Außenring des Wälzlagers 103 unter der Mitnahme durch die Buchse 102. Die Welle 106 und die Verbindungshülse 105 bewegen sich nicht und da zwischen der Welle 106 und dem Innenring des Wälzlagers 103 eine Presspassung besteht, rotiert der Innenring des Wälzlagers 103 nicht mit der Buchse 102.

Nachteilig bei dem oben beschriebenen Stand der Technik ist es, dass aufgrund dessen, dass der Außenring des Wälzlagers rotiert, die Konstruktion des Schutzteils des Wälzlagers komplizierter im Hinblick auf die Zuverlässigkeit wird und/ oder sich die Lebensdauer des Schutzteils verringert und dass zwei komplizierte und teure Dichtungsteile konstruiert werden müssen. Darüber hinaus lässt sich das Wälzlager nach einer Beschädigung nicht einfach tauschen. Um die Lebensdauer des Wälzlagers zu verbessern, muss im Allgemeinen nach einem Jahr das Basisöl des Schmierfetts aufgefüllt werden, was für den Endnutzer zusätzliche Kosten bedeutet. Außerdem ist im Falle eines Defekts des Wälzlagers im Allgemeinen das gesamte Bauteil unbrauchbar und die Buchse kann nicht wiederverwendet werden. Dies bedeutet Verschwendung und ist von Nachteil für die Umwelt.

### Aufgabe der Erfindung

Der vorliegenden Erfindung liegt die Aufgabe zugrunde, die oben aufgeführten Probleme des Standes der Technik zu lösen und eine Fadenführungsrolle bereitzustellen, mit der ein einfacher Aufbau, eine einfache Montage und/oder Demontage, eine Rotation des Innenrings des Wälzlagers, eine einfache Reparatur und/oder Austausch und eine Wiederverwendbarkeit des Bauteils erreicht werden kann.

### Beschreibung der Erfindung

Die obenstehende Aufgabe der vorliegenden Erfindung kann durch die folgende technische Lösung realisiert werden, ist aber nicht auf diese beschränkt.

Eine Fadenführungsrolle, umfassend eine zylinderförmige Buchse, die unter der Mitnahme durch ein externes Garn rotieren kann; eine in Bezug auf die Rotation der Buchse feststehende Welle; sowie ein im Innern der Buchse angeordnetes Wälzlager, wobei die Fadenführungsrolle außerdem eine Verbindungshülse und ein Verbindungsteil umfasst, die Verbindungshülse so mit der Innenoberfläche der Buchse verbunden ist, dass sie der Rotation der Buchse folgen kann, die Verbindungshülse, das Wälzlager und die Welle in Axialrichtung der Buchse angeordnet sind, so dass sich die Verbindungshülse und die Welle jeweils an den beiden entgegengesetzten Seiten des Wälzlagers in Axialrichtung befinden, das Verbindungsteil durch den Innenring des Wälzlagers geführt und abnehmbar mit der Verbindungshülse verbunden ist und der Außenring des Wälzlagers mit der Welle verbunden ist, sodass im noch nicht verbundenen oder gelösten Zustand der Verbindung des Verbindungsteils zur Verbindungshülse mittels der Welle mindestens ein Teil des Verbindungsteils und das Wälzlager in Axialrichtung in die Buchse hineingesteckt oder aus dieser herausbewegt werden können.

Vorzugsweise umfasst das Verbindungsteil eine Schraube und eine mit der Schraube verschraubte Schraubenmutter, wobei die Schraubenmutter in Axialrichtung des Wälzlagers an der von der Welle entfernteren Seite der Schraube angeordnet ist und zwischen der Verbindungshülse und der Schraube eine Spielpassung besteht.

Vorzugsweise umfasst die Fadenführungsrolle weiterhin eine Muffe, die zwischen der Buchse und dem Außenring des Wälzlagers montiert ist, wobei der Außenring des Wälzlagers über die Muffe mit der Welle verbunden ist.

Vorzugsweise ist an der Innenoberfläche der Muffe eine Konkavnut angeordnet und in der Konkavnut ist ein Klemmverbindungsring montiert, der in Axialrichtung des Wälzlagers an der von der Welle entfernteren Seite des Wälzlagers angeordnet ist.

Vorzugsweise besteht zwischen der Muffe und dem Außenring des Wälzlagers eine Spielpassung oder eine Presspassung.

Vorzugsweise halten die Schraube und die Schraubenmutter in Axialrichtung des Wälzlagers die Verbindungshülse und den Innenring des Wälzlagers eng zusammen.

Vorzugsweise besteht zwischen der Buchse und der Verbindungshülse eine Presspassung und zwischen dem Innenring des Wälzlagers und der Schraube ebenfalls eine Presspassung.

Vorzugsweise umfasst die Verbindungshülse einen Kreisplattenteil und einen an der radialen Innenseite des Kreisplattenteils teilweise in Axialrichtung hervorstehenden Kreisringteil, wobei der Kreisringteil am Innenring des Wälzlagers anliegt.

Vorzugsweise umfasst die Verbindungshülse weiterhin mehrere am Kreisplattenteil angeordnete strahlenförmig erstreckte Rippen.

Im Vergleich zum Stand der Technik und den entsprechenden Produkten weist die vorliegende Erfindung die Vorteile auf, dass die Fadenführungsrolle einfach zu demontieren und instand zu halten ist und insbesondere nach einem Defekt des Wälzlagers Verbindungsteil und Wälzlager einfach gemeinsam herausgezogen und getauscht werden können, sodass vermieden wird, dass aufgrund eines aufwändigen Tauschs des Wälzlagers die gesamte Fadenführungsrolle entsorgt werden muss und somit Produktionskosten gespart werden. Bei einer Fadenführungsrolle gemäß der vorliegenden Erfindung rotiert der Innenring des Wälzlagers der Fadenführungsrolle und der Außenring des Wälzlagers rotiert nicht, was vorteilhaft für die Verwendung eines Wälzlagers mit einem einzelnen Schutzteil ist. Die Konstruktion eines komplizierten Schutzteils und das Nachfüllen von Öl bei der Instandhaltung sind nicht notwendig und ein großer Teil der Einzelkomponenten kann wiederverwendet werden.

### Kurze Beschreibung der Zeichnungen

Die Erfindung wird nachfolgend anhand eines bevorzugten Ausführungsbeispiels unter Bezugnahme auf die beigefügten Zeichnungen näher erläutert. Dabei zeigen:
- Figur 1: eine Schnittdarstellung einer erfindungsgemäß ausgebildeten Fadenführungsrolle;
- Figur 2: eine schematische Darstellung der näher zur Welle befindlichen Seite der Verbindungshülse einer erfindungsgemäß ausgebildeten Fadenführungsrolle;
- Figur 3: eine schematische Darstellung der entfernter zur Welle befindlichen Seite der Verbindungshülse einer erfindungsgemäß ausgebildeten Fadenführungsrolle;
- Figur 4: eine schematische Darstellung des Klemmverbindungsrings einer erfindungsgemäß ausgebildeten Fadenführungsrolle;

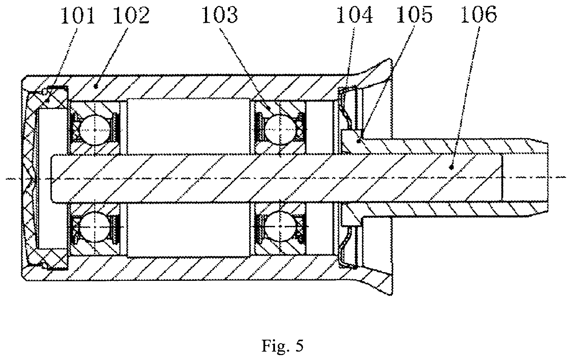

- Figur 5: eine Schnittdarstellung einer Fadenführungsrolle des Stands der Technik.

### Ausführliche Beschreibung der Zeichnungen

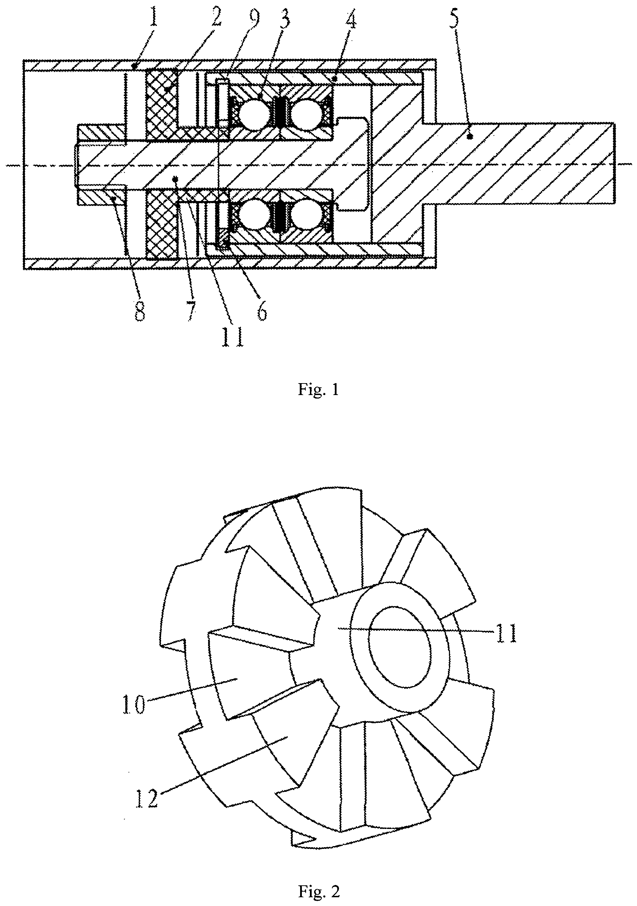

Wie in Figur 1 gezeigt, betrifft eine Ausführungsform der vorliegenden Erfindung eine Fadenführungsrolle, umfassend eine zylinderförmige Buchse 1, die unter der Mitnahme durch ein externes Garn rotieren kann, eine in Bezug auf die Rotation der Buchse 1 feststehende Welle 5, sowie ein im Innern der Buchse 1 angeordnetes Wälzlager 3, wobei die Fadenführungsrolle weiterhin eine Verbindungshülse 2 und ein Verbindungsteil umfasst, die Verbindungshülse 2 so mit der Innenoberfläche der Buchse 1 verbunden ist, dass sie der Rotation der Buchse 1 folgen kann. Dabei sind die Verbindungshülse 2, das Wälzlager 3 und die Welle 5 in Axialrichtung der Buchse 1 so angeordnet, dass sich die Verbindungshülse 2 und die Welle 5 jeweils an den beiden entgegengesetzten Seiten des Wälzlagers 3 in Axialrichtung befinden, das Verbindungsteil durch den Innenring des Wälzlagers 3 geführt und abnehmbar mit der Verbindungshülse 2 verbunden ist und der Außenring des Wälzlagers 3 mit der Welle 5 verbunden ist, sodass im noch nicht verbundenen oder gelösten Zustand der Verbindung des Verbindungsteils mit der Verbindungshülse 2 mittels der Welle 5 mindestens ein Teil des Verbindungsteils und das Wälzlager 3 in Axialrichtung in die Buchse 1 hineingesteckt oder aus dieser herausbewegt werden können.

Auf Grundlage des oben beschriebenen Aufbaus können die Buchse 1, die Verbindungshülse 2, das Verbindungsteil und der Innenring des Wälzlagers 3 gemeinsam rotieren und der Außenring des Wälzlagers 3 ist an der Welle 5 befestigt. Somit kann, wenn beispielsweise ein defektes Wälzlager 3 getauscht werden muss, zunächst das Verbindungsteil von der Verbindungshülse 2 demontiert beziehungsweise die Befestigung zwischen dem Verbindungsteil und der Verbindungshülse 2 gelöst werden und anschließend das Verbindungsteil und das Wälzlager 3 gemeinsam aus der Buchse 1 herausgezogen werden.

Gemäß einer bevorzugten Ausführungsform umfasst das Verbindungsteil eine Schraube 7 und eine mit der Schraube 7 verschraubte Schraubenmutter 8, wobei die Schraubenmutter 8 in Axialrichtung des Wälzlagers 3 an der entfernter zur Welle 5 befindlichen Seite der Schraube 7 angeordnet ist und zwischen der Verbindungshülse 2 und der Schraube 7 eine Spielpassung besteht. Die Verwendung der Schraube 7 und der Schraubenmutter 8 für das Verbindungsteil macht die vorliegende Erfindung einfach im Aufbau und leicht zu realisieren. Wenn in der Anwendung die Bewegung des externen Garns die Rotation der Buchse 1 antreibt, rotiert die Verbindungshülse 2 unter Mitnahme durch die Buchse 1 und anschließend rotieren die Schraube 7, die Schraubenmutter 8 und der Innenring des Wälzlagers 3 unter Mitnahme durch die Verbindungshülse 2. Mit anderen Worten rotieren die Buchse 1, die Verbindungshülse 2, die Schraube 7, die Schraubenmutter 8 und der Innenring des Wälzlagers 3 gemeinsam. Da der Außenring des Wälzlagers 3 mit der extern befestigten Welle 5 verbunden ist, rotiert der Außenring des Wälzlagers 3 nicht mit der Buchse 1, der Verbindungshülse 2, der Schraube 7, der Schraubenmutter 8 und dem Innenring des Wälzlagers 3. Damit müssen beispielsweise bei einer Instandhaltung nur der in Figur 1 linksseitig angeordnete Enddeckel (nicht dargestellt) der Buchse 1 geöffnet und die Schraubenmutter 8 gelöst werden, um die Schraube 7 und das Wälzlager 3 von der Buchse 1 und der Verbindungshülse 2 trennen zu können. Die zwischen der Verbindungshülse 2 und der Schraube 7 bestehende Spielpassung ist geeignet, um bei einer Instandhaltung bzw. einem Tausch die Schraube 7 einfacher aus der Verbindungshülse 2 zu entnehmen. Gemäß einer bevorzugten Ausführungsform umfasst die Fadenführungsrolle weiterhin eine Muffe 4, wobei die Muffe 4 zwischen der Buchse 1 und dem Außenring des Wälzlagers 3 montiert ist und der Außenring des Wälzlagers 3 über die Muffe 4 mit der Welle 5 verbunden ist. Ein solcher Aufbau ist insbesondere für eine Verbindung des Außenrings des Wälzlagers 3 geeignet und bewirkt, dass eine Verbindung der Welle 5 mit dem Außenring des Wälzlagers 3 gebildet wird. Außerdem ist er geeignet, um nach dem gemeinsamen Herausziehen der Welle 5, der Muffe 4, des Wälzlagers 3 und der Schraube 7 aus der Buchse 1 die Muffe 4 vom Außenring des Wälzlagers 3 zu lösen, um beispielsweise ein defektes Wälzlager zu tauschen.

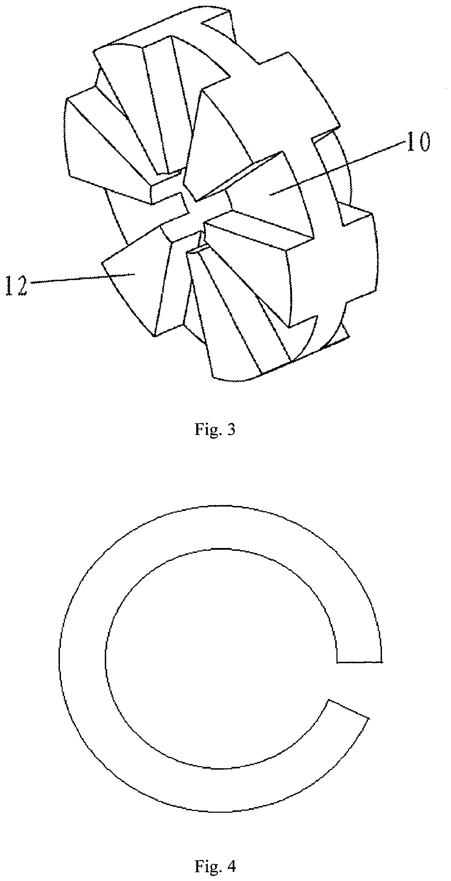

Gemäß einer bevorzugten Ausführungsform ist an der Innenoberfläche der Muffe 4 eine Konkavnut 9 angeordnet und in der Konkavnut 9 ist ein Klemmverbindungsring 6 montiert, der in Axialrichtung des Wälzlagers 3 an der von der Welle 5 entfernteren Seite des Wälzlagers 3 angeordnet ist. Die Funktion des Klemmverbindungsrings 6 ist es, im regulären Betrieb der Fadenführungsrolle das Wälzlager 3 zusätzlich zu halten und dessen Verschiebung in Axialrichtung verhindern zu können und beim Herausziehen der Muffe 4 durch das Anliegen des Klemmverbindungsrings 6 am Wälzlager 3 zusätzlich zu gewährleisten, dass das Wälzlager 3 gemeinsam mit der Muffe 4 herausbewegt wird. In einem Beispiel kann der Klemmverbindungsring 6 einen Aufbau wie in Figur 4 gezeigt aufweisen, d. h. der Klemmverbindungsring 6 bildet annähernd eine C-förmige Kreisplattenform. Durch eine radiale Komprimierung des Klemmverbindungsrings 6 (eine Verkleinerung des Durchmessers des Klemmverbindungsrings) kann der Klemmverbindungsring 6 einfach in der Konkavnut 9 der Muffe 4 montiert werden und wenn anschließend die auf den Klemmverbindungsring 6 einwirkende radiale Komprimierungskraft gelöst wird, wird der Klemmverbindungsring 6 in die Konkavnut 9 geklemmt. Außerdem liegt die radiale Innenseite des Klemmverbindungsrings 6 in Axialrichtung teilweise am Außenring des Wälzlagers 3 an und beispielsweise kann der Innendurchmesser des Klemmverbindungsrings 6 kleiner sein als der Außendurchmesser des Außenrings des Wälzlagers 3 und somit verhindert werden, dass sich der Außenring des Wälzlagers 3 gegenüber der Muffe 4 in Richtung auf das linke Ende in der Figur bewegt und dass beim Herausziehen der Welle 5 in Richtung auf das rechte Ende in der Figur das Wälzlager 3 und die Schraube 7 gemeinsam herausgezogen werden können. Vorzugsweise hat das radiale Innenende des Klemmverbindungsrings 6 keinen Kontakt zum Kreisringteil 11 der Verbindungshülse 2, wodurch die Reibung zwischen beiden beseitigt werden kann.

Gemäß einer bevorzugten Ausführungsform besteht zwischen der Muffe 4 und dem Außenring des Wälzlagers 3 eine Spielpassung. Diese Ausführungsform ist geeignet, um durch die Muffe 4 die Welle 5 mit dem Außenring des Wälzlagers 3 zu verbinden und nach dem gemeinsamen Herausziehen der Welle 5, der Muffe 4, des Wälzlagers 3 und der Schraube 7 aus der Buchse 1 die Muffe 4 einfacher vom Außenring des Wälzlagers 3 zu lösen, um beispielsweise ein defektes Wälzlager zu tauschen.

Gemäß einer alternativen Ausführungsform besteht zwischen der Muffe 4 und dem Außenring des Wälzlagers 3 eine Presspassung. Obwohl bei dieser Ausführungsform nach dem gemeinsamen Herausziehen der Welle 5, der Muffe 4, des Wälzlagers 3 und der Schraube 7 aus der Buchse 1 für das Lösen des Außenrings des Wälzlagers 3 von der Muffe 4 möglicherweise die Hilfe eines Werkzeugs benötigt wird, kann dennoch sichergestellt werden, dass die Muffe 4 in einer Einheit mit dem Wälzlager 3 herausgezogen werden kann, ohne dass ein Klemmverbindungsring 6 angeordnet werden muss und somit genauso mindestens ein Ziel der vorliegenden Erfindung realisiert werden kann.

Gemäß einer bevorzugten Ausführungsform besteht zwischen der Muffe 4 und der Welle 5 eine Schraubverbindung. Die Vorteile dabei sind die Festigkeit der Verbindung zwischen der Muffe 4 und der Welle 5, der einfache Aufbau und die problemlose Umsetzung.

Gemäß einer bevorzugten Ausführungsform halten die Schraube 7 und die Schraubenmutter 8 in Axialrichtung des Wälzlagers 3 die Verbindungshülse 2 und den Innenring des Wälzlagers 3 eng zusammen. Das Aneinanderdrücken der Verbindungshülse 2 und des Innenrings des Wälzlagers 3 in Axialrichtung ist geeignet, um eine Verschiebung des Wälzlagers 3 und der Verbindungshülse 2 in Axialrichtung zu verhindern.

Gemäß einer bevorzugten Ausführungsform besteht zwischen der Buchse 1 und der Verbindungshülse 2 eine Presspassung und zwischen dem Innenring des Wälzlagers 3 und der Schraube 7 ebenfalls eine Presspassung. Da im Instandhaltungs- und Austauschzeitraum in der Regel kein Öffnen und keine Entnahme der Verbindungshülse 2 erforderlich ist, erhöht eine solche Anordnung die Stabilität des Aufbaus und ist besser geeignet, die Rotationsbewegung der Buchse 1 vollständig an die Verbindungshülse 2 weiterzuleiten. Darüber hinaus ist die Presspassung zwischen der Schraube 7 und dem Innenring des Wälzlagers 3 besser geeignet, um den Innenring des Wälzlagers 3 noch besser der Rotation der Schraube 7 folgend rotieren zu lassen.

Gemäß einer bevorzugten Ausführungsform umfasst die Verbindungshülse 2, wie in Figur 2 gezeigt, einen Kreisplattenteil 10 und einen an der radialen Innenseite des Kreisplattenteils 10 teilweise in Axialrichtung hervorstehenden Kreisringteil 11, wobei der Kreisringteil 11 am Innenring des Wälzlagers 3 anliegt. Der Kreisringteil 11 kann die Erstreckung der Schraube 7 in Richtung auf das Wälzlager 3 besser führen und das Anliegen des Kreisringteils 11 am Innenring des Wälzlagers 3 kann zusätzlich eine Verschiebung des Wälzlagers 3 in Axialrichtung verhindern. Außerdem kann durch einen solchen Aufbau der Verbindungshülse 2 erreicht werden, dass der Kreisringteil 11 nur mit dem Innenring des Wälzlagers 3 in Kontakt tritt und nicht mit anderen Teilen des Wälzlagers (wie z.B. mit dem Schutzteil oder dem Außenring). Auf diese Weise kann sowohl erreicht werden, dass die Verbindungshülse 2 gemeinsam mit dem Innenring des Wälzlagers 3 rotiert, als auch, dass der Stillstand des Außenrings etc. nicht beeinträchtigt wird.

Gemäß einer bevorzugten Ausführungsform umfasst die Verbindungshülse 2 weiterhin mehrere am Kreisplattenteil 10 angeordnete strahlenförmig erstreckte Rippen 12. Die Rippen 12 können die Festigkeit der Verbindungshülse 2 zusätzlich verstärken und während der Rotation einen Luftstrom erzeugen, der die Wärmeableitung unterstützt.

Darüber hinaus ist in einem Beispiel, wie in Figur 3 gezeigt, an der von der Welle 5 entfernteren Seite der Verbindungshülse 2 (in der Figur die linke Seite) kein Kreisringteil 11 gebildet (der Kreisringteil 11 ist nur an einer Seite des Kreisplattenteils 10 gebildet) und gleichzeitig sind an der von der Welle 5 entfernteren Seite der Verbindungshülse 2 (in der Figur die linke Seite) ebenfalls Rippen 12 angeordnet. Natürlich ist die vorliegende Erfindung nicht hierauf beschränkt. Die von der Welle 5 entferntere Seite der Verbindungshülse 2 (in der Figur die linke Seite) kann zu der näher zur Welle 5 befindlichen Seite der Verbindungshülse 2 (in der Figur die rechte Seite) einen identischen oder einen abweichenden Aufbau in einer beliebigen und geeigneten Form aufweisen. Beispielsweise kann die von der Welle 5 entferntere Seite der Verbindungshülse 2 (in der Figur die linke Seite) keine Rippen 12 aufweisen und gleichzeitig einen Kreisringteil bilden.

In der tatsächlichen Anwendung können beispielsweise die Schraube 7, das Wälzlager 3, die Muffe 4 und die Welle 5 gemeinsam vormontiert sein, wobei anschließend das gesamte Bauteil in der Bohrung der Buchse 1 montiert wird. Der Endteil der Schraube 7 wird durch die Bohrung der Verbindungshülse 2 geführt und anschließend wird die Schraube 7 mit der Schraubenmutter 8 festgezogen.

Im Vergleich zum Stand der Technik kann bei einem Defekt des Wälzlagers 3 in einer Fadenführungsrolle gemäß der vorliegenden Erfindung zunächst die Schraubenmutter 8 gelöst werden, anschließend wird die gesamte defekte aus der Schraube 7, dem Wälzlager 3, der Muffe 4 und der Welle 5 gebildete Einheit herausgezogen und eine vormontierte Einheit aus einer Schraube 7, einem Wälzlager 3, einer Muffe 4 und einer Welle 5 eingesetzt und mit dem Festziehen der Schraubenmutter 8 kann der Tausch abgeschlossen werden, womit die Reparaturhandlungen einfach und schnell auszuführen sind. Darüber hinaus kann bei der getauschten Schraube 7, der Schraubenmutter 8, dem Wälzlager 3, der Muffe 4 und der Welle 5 weiterhin die Muffe 4 vom Außenring des Wälzlagers 3 gelöst und anschließend nur das defekte Wälzlager 3 getauscht werden. So kann ein großer Teil der Komponenten der vorliegenden Erfindung (z.B. die Buchse 1, die Schraube 7, die Schraubenmutter 8, die Muffe 4 und das unbeschädigte Wälzlager 3) erneut genutzt werden. Auf Grundlage des oben aufgeführten Aufbaus wird vermieden, dass wegen eines aufwändigen Tauschs des Wälzlagers 3 die gesamte Fadenführungsrolle entsorgt werden muss.

Darüber hinaus besteht im Vergleich zum Stand der Technik der Vorteil, dass bei einer Fadenführungsrolle der vorliegenden Erfindung der Innenring des Wälzlagers rotieren kann, während der Außenring des Wälzlagers nicht rotiert und sie daher insbesondere für die Verwendung eines Wälzlagers mit einem einzelnen Schutzteil geeignet ist, womit der Aufbau des Schutzteils des Wälzlagers vereinfacht werden kann. Außerdem ist das Wälzlager der Fadenführungsrolle der vorliegenden Erfindung einfach zu öffnen und zu entnehmen, weshalb die Konstruktion eines komplizierten Schutzteils und das Nachfüllen von Öl bei der Instandhaltung nicht notwendig sind. Darüber hinaus können die anderen Bauteile ebenfalls alle wiederverwendet werden und so weitere Kosten für den Austausch von Einzelteilen eingespart werden.

Die vorliegende Erfindung ist nicht beschränkt auf den oben beschriebenen konkreten/bevorzugten Aufbau und ein Fachmann des technischen Gebiets kann selbstverständlich unter der oben beschriebenen Anleitung alle Arten von Veränderungen und Ersetzungen vornehmen, wobei die Veränderungen und Ersetzungen die folgenden Aspekte umfassen, aber nicht auf diese beschränkt sind.

Die Form und Position eines jeden Bauteils ist nicht auf die oben beschriebenen Umstände beschränkt und es muss lediglich gegeben sein, dass die Funktionen der vorliegenden Erfindung realisiert werden können.

Beispielsweise muss die Buchse 1 nicht genau kreiszylinderförmig sein, sondern sie kann an mindestens einem Endteil und/oder zwischen beiden Endteilen eine Ausbuchtung oder eine Konkavnut aufweisen. Die in der Figur dargestellten beiden Wälzlager 3 müssen auch nicht aneinander anliegen, sondern können (beispielsweise durch ein Distanzstück) durch einen bestimmten Abstand voneinander getrennt sein.

Obwohl in der Figur nicht dargestellt, kann die Buchse 1 am linken Ende ein Dichtungsteil wie beispielsweise einen Enddeckel o. ä. aufweisen.

Das Verbindungsteil der vorliegenden Erfindung ist nicht auf die oben beschriebene Kombination aus einer Schraube 7 und einer Schraubenmutter 8 beschränkt. Beispielsweise kann ein Stift (oder ein Bolzen) in eine vorbereitete Bohrung gesteckt sein, die an dem aus der Verbindungshülse 2 hervorgestreckten Ende der Schraube 7 (in der Figur das linke Ende) angeordnet ist, um die Verbindungshülse 2 und den Innenring des Wälzlagers 3 zu befestigen. Natürlich kann für das Verbindungsteil noch ein anderer Aufbau verwendet werden und es muss lediglich gegeben sein, dass die Verbindungshülse 2 und der Innenring des Wälzlagers 3 aneinander befestigt (z.B. befestigt) werden können.

Wie in Figur 1 gezeigt, besteht zwischen dem rechten Ende der Schraube 7 und der Welle 5 vorzugsweise ein kleiner Zwischenraum. Dies ist von Vorteil für die Rotation der Schraube 7 gegenüber der Welle 5 und außerdem kann so die Welle 5 in Axialrichtung nicht in größerem Maß verschoben werden. Zwischen dem rechten Ende der Schraube 7 und der Welle 5 kann auch ein anderer Aufbau angeordnet sein, wie beispielsweise eine Beschichtung oder ein Bauteil zur Verringerung der Reibung (am rechten Ende der Schraube 7 und/oder am linken Ende der Welle 5). Ebenso kann zwischen der Buchse 1 und der Muffe 4 eine Beschichtung zur Verringerung der Reibung angeordnet sein (an mindestens einer der beiden einander gegenüberliegenden Oberflächen).

Obwohl in Figur 1 die dargestellte Anzahl der Wälzlager 3 zwei beträgt, ist die Anzahl der Wälzlager 3 doch nicht auf zwei beschränkt und kann beispielsweise entsprechend dem tatsächlichen Bedarf auch eins, drei, vier oder mehr betragen.

Die Verbindungshülse 2 kann aus Kunststoff gefertigt sein, damit die Verbindungshülse 2 bei Bedarf einfacher entnommen werden kann; die Muffe 4 und die Welle 5 können aus Stahl gefertigt sein, um die Festigkeit der gesamten Verbindung zu gewährleisten. Obenstehend wurden vergleichsweise optimale Ausführungsbeispiele der vorliegenden Erfindung beschrieben, die aber nicht dazu dienen, die vorliegende Erfindung einzuschränken und jegliche Korrekturen, gleichwertige Ersetzungen und Änderungen etc. die im Rahmen der Idee und der Grundprinzipien der vorliegenden Erfindung vorgenommen werden, fallen in den Schutzumfang der vorliegenden Erfindung.

### Bezugszeichenliste

- 1: Buchse
- 2: Verbindungshülse
- 3: Wälzlager
- 4: Muffe
- 5: Welle
- 6: Klemmverbindungsring
- 7: Schraube
- 8: Schraubenmutter
- 9: Konkavnut
- 10: Kreisplattenteil
- 11: Kreisringteil
- 12: Rippe
- 101: Deckel
- 102: Buchse
- 103: Wälzlager
- 104: Dichtungsring
- 105: Verbindungshülse
- 106: Welle

## Patentansprüche

1. Fadenführungsrolle, umfassend eine zylinderförmige Buchse (1), die unter der Mitnahme durch ein externes Garn rotieren kann; eine in Bezug auf die Rotation der Buchse (1) feststehende Welle (5) sowie ein im Innern der Buchse (1) angeordnetes Wälzlager (3), **dadurch gekennzeichnet, dass** die Fadenführungsrolle weiterhin eine Verbindungshülse (2) und ein Verbindungsteil umfasst, die Verbindungshülse (2) so mit der Innenoberfläche der Buchse (1) verbunden ist, dass sie der Rotation der Buchse (1) folgen kann, die Verbindungshülse (2), das Wälzlager (3) und die Welle (5) in Axialrichtung der Buchse (1) angeordnet sind, sodass sich die Verbindungshülse (2) und die Welle (5) jeweils an den beiden entgegengesetzten Seiten des Wälzlagers (3) in Axialrichtung befinden, das Verbindungsteil durch den Innenring des Wälzlagers (3) geführt und abnehmbar mit der Verbindungshülse (2) verbunden ist und der Außenring des Wälzlagers (3) mit der Welle (5) verbunden ist, sodass im noch nicht verbundenen oder gelösten Zustand der Verbindung des Verbindungsteils mit der Verbindungshülse (2) mittels der Welle (5) mindestens ein Teil des Verbindungsteils und das Wälzlager (3) in Axialrichtung in die Buchse (1) hineingesteckt oder aus dieser herausbewegt werden können.

2. Fadenführungsrolle nach Anspruch 1, **dadurch gekennzeichnet, dass** das Verbindungsteil eine Schraube (7) und eine mit der Schraube (7) verschraubte Schraubenmutter (8) umfasst, wobei die Schraubenmutter (8) in Axialrichtung des Wälzlagers (3) an der von der Welle (5) entfernteren Seite der Schraube (7) angeordnet ist und zwischen der Verbindungshülse (2) und der Schraube (7) eine Spielpassung besteht.

3. Fadenführungsrolle nach Anspruch 1, **dadurch gekennzeichnet, dass** die Fadenführungsrolle weiterhin eine Muffe (4) umfasst, wobei die Muffe (4) zwischen der Buchse (1) und dem Außenring des Wälzlagers (3) montiert ist und der Außenring des Wälzlagers (3) über die Muffe (4) mit der Welle (5) verbunden ist.

4. Fadenführungsrolle nach Anspruch 3, **dadurch gekennzeichnet, dass** an der Innenoberfläche der Muffe (4) eine Konkavnut (9) angeordnet ist und in der Konkavnut (9) ein Klemmverbindungsring (6) montiert ist, der in Axialrichtung des Wälzlagers (3) an der von der Welle (5) entfernteren Seite des Wälzlagers (3) angeordnet ist.

5. Fadenführungsrolle nach Anspruch 4, **dadurch gekennzeichnet, dass** zwischen der Muffe (4) und dem Außenring des Wälzlagers (3) eine Spielpassung besteht.

6. Fadenführungsrolle nach Anspruch 4, **dadurch gekennzeichnet, dass** zwischen der Muffe (4) und dem Außenring des Wälzlagers (3) eine Presspassung besteht.

7. Fadenführungsrolle nach einem der Ansprüche 2 bis 6, **dadurch gekennzeichnet, dass** die Schraube (7) und die Schraubenmutter (8) in Axialrichtung des Wälzlagers (3) die Verbindungshülse (2) und den Innenring des Wälzlagers (3) eng zusammen halten.

8. Fadenführungsrolle nach Anspruch 7, **dadurch gekennzeichnet, dass** zwischen der Buchse (1) und der Verbindungshülse (2) eine Presspassung besteht und dass zwischen dem Innenring des Wälzlagers (3) und der Schraube (7) eine Presspassung besteht.

9. Fadenführungsrolle nach einem der Ansprüche 1 bis 6, **dadurch gekennzeichnet, dass** die Verbindungshülse (2) einen Kreisplattenteil (10) und einen an der radialen Innenseite des Kreisplattenteils (10) teilweise in Axialrichtung hervorstehenden Kreisringteil (11) umfasst, wobei der Kreisringteil (11) am Innenring des Wälzlagers (3) anliegt.

10. Fadenführungsrolle nach Anspruch 9, **dadurch gekennzeichnet, dass** die Verbindungshülse (2) weiterhin mehrere am Kreisplattenteil (10) angeordnete strahlenförmig erstreckte Rippen (12) umfasst.

## Claims

1. A godet roller, comprising a cylindrical bushing (1) capable of rotating under the driving of an external yarn; a shaft (5) fixed relative to the rotation of the bushing (1) and a roller bearing (3) arranged inside the bushing (1), **characterised in that** the godet roller further comprises a connecting sleeve (2) and a connecting component, the connecting sleeve (2) is connected to the inner surface of the bushing (1) so as to be able to rotate along with the bushing (1), the connecting sleeve (2), the roller bearing (3) and the shaft (5) are arranged along the axial direction of the bushing (1) so that the connecting sleeve (2) and the shaft (5) are respectively located on the two opposite sides of the roller bearing (3) in the axial direction, the connecting component is guided through the inner ring of the roller bearing (3) and is detachably connected to the connecting sleeve (2) and the outer ring of the roller bearing (3) is connected to the shaft (5) so that, in a case in which the connecting component is not yet connected to the connecting sleeve (2) or the connection therebetween is cancelled, at least one part of the connecting component and the roller bearing (3) can be inserted into or moved out of the bushing (1) along the axial direction by means of the shaft (5).

2. The godet roller according to claim 1, **characterised in that** the connecting component comprises a screw (7) and a screw nut (8) screwed to the screw (7), wherein the screw nut (8) is arranged in the axial direction of the roller bearing (3) on the side of the screw (7) that is further away from the shaft (5) and there is a clearance fit between the connecting sleeve (2) and the screw (7).

3. The godet roller according to claim 1, **characterised in that** the godet roller further comprises a sleeve (4), wherein the sleeve (4) is mounted between the bushing (1) and the outer ring of the roller bearing (3) and the outer ring of the roller bearing (3) is connected to the shaft (5) via the sleeve (4).

4. The godet roller according to claim 3, **characterised in that** a concave groove (9) is arranged on the inner surface of the sleeve (4) and a clamping connection ring (6) is mounted in the concave groove (9), which clamping connection ring is arranged in the axial direction of the roller bearing (3) on the side of the roller bearing (3) further away from the shaft (5).

5. The godet roller according to claim 4, **characterised in that** a clearance fit exists between the sleeve (4) and the outer ring of the roller bearing (3).

6. The godet roller according to claim 4, **characterised in that** a press fit exists between the sleeve (4) and the outer ring of the roller bearing (3).

7. The godet roller according to any one of claims 2 to 6, **characterised in that** the screw (7) and the screw nut (8) hold the connecting sleeve (2) and the inner ring of the roller bearing (3) close together along the axial direction of the roller bearing (3).

8. The godet roller according to claim 7, **characterised in that** a press fit exists between the bushing (1) and the connecting sleeve (2) and **in that** a press fit exists between the inner ring of the roller bearing (3) and the screw (7).

9. The godet roller according to any one of claims 1 to 6, **characterised in that** the connecting sleeve (2) comprises a circular plate component (10) and a circular ring component (11) partially protruding along the axial direction on the radial inner side of the circular plate component (10), wherein the circular ring component (11) abuts the inner ring of the roller bearing (3).

10. The godet roller according to claim 9, **characterised in that** the connecting sleeve (2) further comprises a plurality of ribs (12) extending in the form of rays and arranged on the circular plate component (10).

## Revendications

1. Galet guide-fil comprenant une douille cylindrique (1), laquelle peut tourner tout en étant entraînée par un fil extérieur ; un arbre (5) fixe par rapport à la rotation de la douille (1) ainsi qu'un palier à roulement (3) disposé à l'intérieur de la douille (1), **caractérisé en ce que** le galet guide-fil comprend en outre un manchon de raccordement (2) et une pièce de raccordement, le manchon de raccordement (2) est raccordé à la surface intérieure de la douille (1) de telle sorte qu'elle peut suivre la rotation de la douille (1), le manchon de raccordement (2), le palier à roulement (3) et l'arbre (5) sont disposés dans le sens axial de la douille (1) de telle sorte que le manchon de raccordement (2) et l'arbre (5) sont respectivement situés sur les deux côtés opposés du palier à roulement (3) dans le sens axial, la pièce de raccordement est guidée à travers la bague intérieure du palier à roulement (3) et raccordée de manière amovible au manchon de raccordement (2) et la bague extérieure du palier à roulement (3) est raccordée à l'arbre (5) de telle sorte que, dans l'état non encore raccordé ou détaché du raccordement de la pièce de raccordement au manchon de raccordement (2) au moyen de l'arbre (5), au moins une partie de la pièce de raccordement et le palier à roulement (3) peuvent être insérés dans la douille (1) ou déplacés hors de celle-ci dans le sens axial.

2. Galet guide-fil selon la revendication 1, **caractérisé en ce que** la pièce de raccordement comprend une vis (7) et un écrou de vis (8) vissé sur la vis (7), dans lequel l'écrou de vis (8) est disposé dans le sens axial du palier à roulement (3) sur le côté de la vis (7) le plus éloigné de l'arbre (5) et un ajustement avec jeu existe entre le manchon de raccordement (2) et la vis (7).

3. Galet guide-fil selon la revendication 1, **caractérisé en ce que** le galet guide-fil comprend en outre un manchon (4), dans lequel le manchon (4) est monté entre la douille (1) et la bague extérieure du palier à roulement (3) et la bague extérieure du palier à roulement (3) est raccordée à l'arbre (5) par l'intermédiaire du manchon (4).

4. Galet guide-fil selon la revendication 3, **caractérisé en ce qu'**une rainure concave (9) est disposée sur la surface intérieure du manchon (4) et une bague de raccordement par serrage (6) est montée dans la rainure concave (9), laquelle, dans le sens axial du palier à roulement (3), est disposée sur le côté du palier à roulement (3) le plus éloigné de l'arbre (5).

5. Galet guide-fil selon la revendication 4, **caractérisé en ce qu'**entre le manchon (4) et la bague extérieure du palier à roulement (3) existe un ajustement avec jeu.

6. Galet guide-fil selon la revendication 4, **caractérisé en ce qu'**entre le manchon (4) et la bague extérieure du palier à roulement (3) existe un ajustement serré.

7. Galet guide-fil selon l'une quelconque des revendications 2 à 6, **caractérisé en ce que** la vis (7) et l'écrou de vis (8) maintiennent la douille de raccordement (2) et la bague intérieure du palier à roulement (3) rapprochées dans le sens axial du palier à roulement (3).

8. Galet guide-fil selon la revendication 7, **caractérisé en ce qu'**il existe un ajustement serré entre la douille (1) et le manchon de raccordement (2) et **en ce qu'**il existe un ajustement serré entre la bague intérieure du palier à roulement (3) et la vis (7).

9. Galet guide-fil selon l'une quelconque des revendications 1 à 6, **caractérisé en ce que** le manchon de raccordement (2) comprend une partie de plaque circulaire (10) et une partie de bague circulaire (11) qui fait partiellement saillie dans le sens axial sur le côté intérieur radial de la partie de plaque circulaire (10), dans lequel la partie de bague circulaire (11) repose contre la bague intérieure du palier à roulement (3).

10. Galet guide-fil selon la revendication 9, **caractérisé en ce que** le manchon de raccordement (2) comprend en outre une pluralité de nervures (12) s'étendant sous forme de rayons et disposées sur la partie de plaque circulaire (10).
